# EUROPEAN PATENT SPECIFICATION

(11) **EP 3 423 192 B1**
(45) Date of publication and mention of the grant of the patent: **31.03.2021**
(21) Application number: 16828757.1
(22) Date of filing: 23.12.2016
(51) Int. Cl.: B03C 3/12, B03C 3/32, B03C 3/36, B03C 3/78

(54) **AIR PURIFIER AND A METHOD OF PURIFYING AIR**
LUFTREINIGER UND VERFAHREN ZUR REINIGUNG VON LUFT
PURIFICATEUR D'AIR ET PROCÉDÉ DE PURIFICATION D'AIR

(30) Priority: 04.03.2016 FI 20165186
(43) Date of publication of application: 09.01.2019
(73) Proprietor: Aavi Technologies Ltd, 01640 Vantaa (FI)
(72) Inventor: RANTANEN, Pekka, 01800 Klaukkala (FI); LIPPOJOKI, Ismo, 01650 Vantaa (FI); NIEMI, Antti, 02590 Lappers (FI)
(74) Representative: Laine IP Oy
(86) International application number: PCT/FI2016/050918
(87) International publication number: WO 2017/149192

(56) References cited:
- EP-A2- 2 327 481
- GB-A- 682 287
- US-A- 2 494 822
- US-A- 3 156 547
- US-A1- 2006 275 651

## Description

### FIELD

The present invention relates to air purifiers, and more particularly to air purifiers with an electrostatic precipitator.

### BACKGROUND

An electrostatic precipitator (ESP), or an electrostatic air purifier, is a device that removes fine particles, like dust and smoke, from a flowing gas by electrostatic attraction. ESPs ionize, or electrically charge, particles as incoming air is drawn over an electronic cell. The charged particles are then attracted to and trapped by collector plates that are grounded or positively/negatively charged. The trapped particles stick to the plates until they are removed. Collector plates are usually formed as an assembly of parallel conductive plates or nested cylinders.

Depending on the method by which particulates are removed from the collector plates, electrostatic precipitators may be divided into two categories: dry and wet. The dry variant is the most abundantly used, basic form of an ESP. In industrial-scale dry ESPs the removal of accumulated dust can be accomplished by using rappers: the dirt and dust is shaken loose by vibration.

In wet precipitators, a continuous supply of water is used for forming a wet layer on the surfaces of the collector plates to remove the dirt therefrom.

In household electrostatic air purifiers, which are of the dry type but without any rapper or vibration technology, the accumulated dirt must be removed for example by manually cleaning the plates with regular intervals. If the plates are not cleaned regularly, the purification efficiency drops. Typically, cleaning is accomplished by removing the plate assembly, soaking it to a cleansing solution for several hours, rinsing with water, and allowing to dry. Washing the plate assembly in a dishwasher has also been recommended by manufacturers. Alternatively, the user may replace the collector assembly with a new assembly.

Air purifiers comprising an electrostatic collector have been described for example in the following publications:

EP 0995494 A2 describes an air filtering device in the form of an electrostatic precipitator, comprising an array of a plurality of electrically charged plates spaced apart to allow flow of air through the array. The array of plates comprises a plurality of cylindrically shaped plates of differing diameters positioned in a coaxial array about a central discharge rod.

US 850321 describes an air purifier comprising corona discharge point electrodes mounted on a carrier connected with a source of high tension and arranged in an exhaust duct provided with openings for the introduction of air, incandescent means arranged before the corona discharge point electrodes and a plurality of electrically charged members arranged after the corona discharge point electrodes. The electrically charged members may consist of concentric tubes spaced apart by means of insulating elements and alternately connected to high voltage and earth, respectively.

US 2015/0182976 A1 describes an electrostatic precipitator for an air purifier, including a first spiral strip having a continuous conductive electrode, a second spiral strip having a continuous conductive electrode and nested with the first strip, and a plurality of combs.

Washing systems for electrostatic air purifiers have been described for example in the following publications:

JP 2002035641 A discloses a washing device for an electrostatic dust collector in which a plurality of dust-collecting plates is arranged parallel to each other. The washing device consists of a multistage cylinder, water washing nozzles fitted to the front end of the multistage cylinder so as to be rotatable clockwise and counterclockwise and used for jetting high-pressure water, and a wire-drum type winch for controlling the extension speed of the multistage cylinder.

US 4240809 discloses an electrostatic air cleaner intended for commercial and industrial air cleaning applications, particularly for environments containing heavily polluted air, such as industrial welding operations. The air cleaner includes a number of precipitator cells having spaced parallel plates for collecting dirt particles, and a vertically disposed traversing pipe-like spray header containing spray nozzles for directing a spray of wash or rinse fluid onto the plates in order to remove collected particles. The header is traversed horizontally across the precipitator cells by means of a trolley reciprocating between a home position and an extended position

GB682287A discloses an air purifier according to the preamble of the independent claim 1.

### SUMMARY OF THE INVENTION

There is a need for developing an improved household air purifier based on an electrostatic precipitator that is easy to keep clean in order to maintain high purification efficiency.

There is a further need for simplifying and compacting the structure of household air purifiers, particularly by reducing the amount of parts that require maintenance, cleaning or replacement at regular intervals.

The invention is defined by the features of the independent claims. Some specific embodiments are defined in the dependent claims.

According to an aspect of the present invention, there is provided an air purifier comprising a housing with an essentially vertical central axis when in operation, said housing comprising in a cascade: an ionization chamber arranged for charging impurity particles in the incoming air; electrostatic collector plates located above the ionization chamber and arranged for trapping the charged impurity particles. The air purifier is characterized in that it further comprises: a washing system above the electrostatic collector plates, which washing system is arranged for dispensing a cleansing solution onto the electrostatic collector plates; a fan system inside the housing, which fan system is capable of two-mode action: a purification mode of aspirating air to be purified upwards, through the ionization chamber and subsequently through the electrostatic collector plates, and a drying mode of blowing air in the opposite direction.

According to an aspect of the present invention, there is provided an air cleaner comprising an elongated housing having an essentially vertical central axis, said housing having an inlet for air to be cleaned and an outlet for the cleaned air, and further exhibiting in a cascade a first zone connected to the inlet and arranged for charging impurity particles in the air to be cleaned; and a second zone connected to the outlet and arranged for trapping the charged impurity particles. Advantageously, the first zone is an ionization chamber, and the second zone is a collector plate assembly. Additionally, the air cleaner comprises a washing system located above the second zone and arranged for dispensing a cleansing solution by gravitational force or by pressure, and a fan system located within the housing and arranged for aspirating air upwards in one mode and for blowing air downwards in another mode with regard to the essentially vertical central axis.

According to an aspect of the present invention, there is provided a method of purifying air, comprising one or more cycles comprising the steps of: aspirating air to be purified by means of a fan system in an upward direction into an ionization chamber for charging impurity particles in the air and subsequently through electrostatic collector plates for trapping the charged impurity particles; suspending air aspiration; dispensing a cleansing solution onto the electrostatic collector plates by means of an automated washing system located above the electrostatic collector plates; drying the plates by blowing air by means of the fan system in a downward direction; suspending air blowing; resuming air aspiration.

The invention provides considerable advantages. Integration of a washing system into a household-scale air purifier is advantageous, because in this way washing is easier to carry out, and the washing efficiency will not be dependent on the skills of the user. In household environments, the user typically does not monitor the air quality by external detectors, and he/she is thus not aware of a possible decrease in the purification efficiency. In such a situation it is expedient that the maintenance and cleaning of the collector plates is made as automatic as possible.

A further advantage is that the washing solution can be less concentrated as it can be dispensed effectively onto the plates instead of passive soaking. Also the time needed for the plate cleaning operation can be reduced because no disassembly or demounting of the collector plates is needed, and the fan system can be utilized for drying the washed plates quickly.

A further advantage is that as the performance of the collector plates can be kept high, the air purifier does not necessarily need any other filters but can rely on the ionizer and the electrostatic precipitator to reach a sufficient purification result.

### BRIEF DESCRIPTION OF THE DRAWINGS

FIGURE 1 illustrates an example apparatus capable of supporting at least some embodiments of the present invention, and
FIGURES 2A to 2D show different embodiments of electrostatic collector plates according to the present invention.

### EMBODIMENTS

The invention provides an air purifier with an improved electrostatic collector structure and an integrated washing system.

In the present context, the term "generalized cylinder" refers to a cylinder shape the cross-section of which can be any closed or open curve.

In the present context, the term "spiral-wound plate" refers to a plate that has been wound to a spiral so that the cross-section of the wound plate is a curve that winds around a fixed center point at a continuously increasing distance from the point.

In one embodiment, the air purifier is a household air purifier. In a household air purifier, the air flow during purification is typically in the range 50 to 1000 m³/h, for example 50 to 400 m³/h. The impurities that are present in the air in a household environment include dust from textiles, sand dust, soot, hair, greasy particles, and/or microbes.

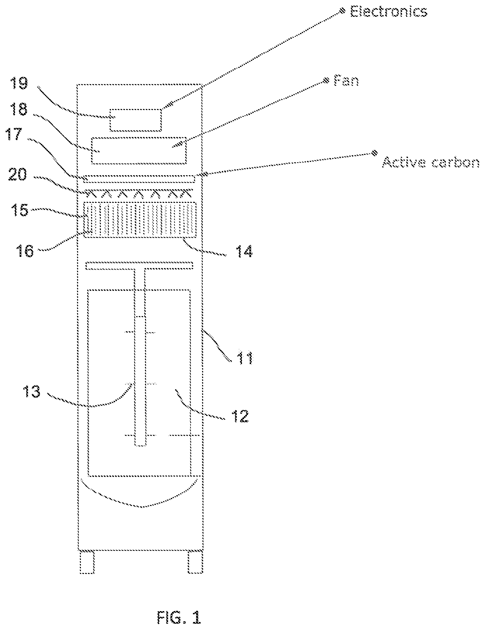

According to one embodiment of the present invention, Fig. 1 shows an air purifier with a housing 11 enclosing an inner space with a vertical central axis when in use. Incoming air, i.e. air to be purified, is introduced to the purifier from below, in parallel with the vertical central axis. The air is first arranged to flow through an ionization chamber 12, which contains a tube with ionization needles 13. In this embodiment, the upward flow of air is established by means of an axial fan 18. In the ionization chamber 12, small impurity particles (with diameters less than about 100 nm) become charged and thrown against the side walls of the chamber 12. Larger particles (with diameters greater than about 100 nm) also become charged, but they are conducted further upwards, until the electrostatic collector 14, which traps them. The electrostatic collector 14 comprises charged and/or grounded conductive collector plates, such as plates 15 and 16. The purified air exits after having flown through the inner space in the vertical direction, for example through holes in a top part of the housing 11.

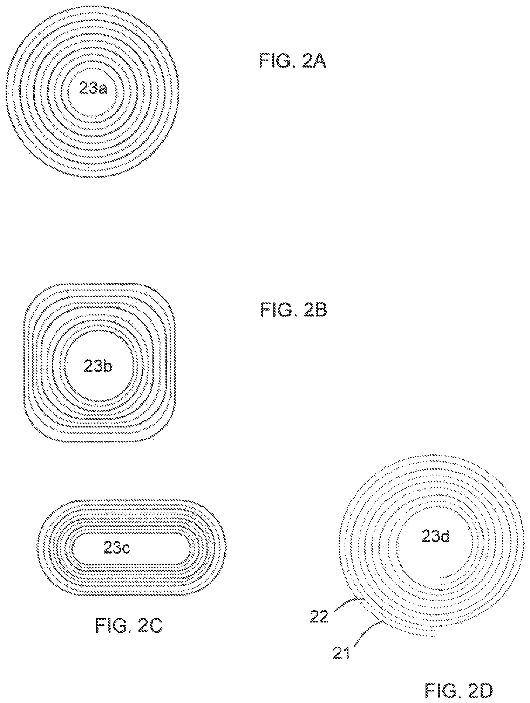

In the embodiment of Fig. 2, the air purifier comprises an integrated washing system in the form of washing nozzles 20 located above the electrostatic collector plates, which nozzles are arranged for spraying a cleansing solution onto the electrostatic collector plates.

In some embodiments, the dispensing of the cleansing solution can be done either by utilizing gravitational force or by applying pressure.

The washing system can be arranged to be activated by the user. The air purifier preferably indicates the need for collector plate cleaning at regular intervals.

In one embodiment, after activation, the nozzles 20 spray a cleansing solution onto the plates for a pre-determined period of time. The cleansing solution flows downwards through the plate assembly and through the ionization chamber, and finally into a reservoir in the bottom of the purifier. The washed plates and the ionization chamber are dried by means of the axial fan 18. The fan 18 is capable of two-mode action: a purification mode of aspirating air to be purified upwards through the ionization chamber and subsequently through the electrostatic collector plates, and a drying mode of blowing air in the opposite direction, i.e. downwards. The drying mode can be automatically activated for a pre-determined period of time after the spraying has been completed.

The used cleansing solution can be directed to a container located in the bottom of the purifier, or it can be pumped to a remote container, or it can be directed to drainage.

The fan system is located within the inner space of the air purifier. The fan system is kept clean by being located above the collector plates, thus avoiding contact with used cleansing solution. According to an example not covered by the appended claims, to reduce noise, it is advantageous to position the fan system inside the housing of the air purifier, surrounded by other components of the purifier, for example between the collector plates and the ionization chamber.

The fan system comprises an axial fan that is capable of aspirating air in one direction, i.e. upwards, and of blowing air in the opposite direction, i.e. downwards, by changing the rotation direction of its propeller. The axial fan is thus able to blow air in either direction, and for the duration of the drying step, the rotation direction of a propeller of the axial fan is changed to opposite to change the direction of air flow to the downward direction; and before resuming air aspiration, the rotation direction of the propeller of the axial fan is restored to the original direction to change the direction of air flow back to the upward direction.

In an embodiment not covered by the appended claims, the fan system comprises a first fan arranged for aspirating air in the purification mode and a second fan arranged for blowing air in the drying mode, and wherein the first fan is inactive during the drying mode and the second fan is inactive in the purification mode. In this embodiment, the first and the second fan can be independently selected from the following: an axial-flow fan, a centrifugal fan, a cross-flow fan.

In an embodiment not covered by the appended claims, the fan system comprises only one fan which is arranged to be turned around when shifting between the purification mode and the drying mode. Upon turning the whole fan around by 180 degrees, the direction of air flow (the blowing direction) becomes opposite. In this embodiment, the fan can be any suitable fan, for example an axial fan or a centrifugal fan.

In an exemplary method not covered by the appended claims, the fan system comprises only one fan, and for the duration of the drying step, the fan is turned around to change the direction of air flow to the downward direction; and before resuming air aspiration, the fan is again turned around to change the direction of air flow back to the upward direction.

Turning around of the fan can be carried out manually or by means of a turning motor.

The flow rate during the purification mode is for example 50 to 1000 m³/h, preferably 50 to 400 m³/h, more preferably 60 to 300 m³/h, most preferably 100 to 200 m³/h.

The flow rate to the opposite direction during the drying mode is preferably equal to or smaller than the flow rate during the purification mode, for example 20 to 400 m³/h, preferably 30 to 100 m³/h.

In one embodiment, the air to be blown in the drying mode is heated by means of an electrical heating element in order to speed up drying.

The preparation and supply of a suitable cleansing solution can be accomplished in many ways. In one embodiment the air purifier has an integrated container into which a ready-to-use cleansing solution is poured before activating the washing system. In another embodiment, only water is poured into the integrated container, and the purifier is arranged to add a suitable amount of a liquid or solid cleansing agent (e.g. in the form of solid tablets or powders) to the water from a separate integrated container that preferably is dimensioned for serving several washing rounds. In yet another embodiment, the purifier is connected by hoses to an external water supply (e.g. a tap) that provides water to the integrated container. In this embodiment, user efforts are minimized once the purifier has been installed.

Suitable cleansing solutions include aqueous solutions of surfactants, aqueous solutions of dishwasher detergents, aqueous solutions of non-foaming detergents and aqueous solutions of sodium hydroxide.

Figs. 2A to 2D illustrate different embodiments of electrostatic collector plates according to the present invention.

In Fig. 2A, the collector plates consist of nested cylinders which have a cross-section of a circle. The air coming from the ionization chamber contains charged particles, which are attracted by oppositely charged collector plates. Every other collector plate is positively or negatively charged while each alternating plate is grounded. In some embodiments, every other collector plate is positively charged while each alternating plate is negatively charged.

The central part 23a of the collector is blocked and air cannot enter there. Thus, air is forced to flow between the collector plates, and charged impurity particles are effectively trapped.

Figs. 2B to 2D show other possible geometries for the collector plates. In Fig. 2B the collector plates are nested cylinders which have cross-sections varying from a circle to a round-cornered square.

In Fig. 2C the collector plates are nested cylinders which have an oval cross-section, resembling the shape of a racing track.

In Fig. 2D the collector plates consist of two nested spiral-wound plates 21, 22.

Preferably, the electrostatic collector plates comprise nested generalized cylinders, or alternatively the electrostatic collector plates comprise nested spiral-wound plates.

According to some embodiments, the nested spiral-wound plates have a cross-section which is one of the following: Archimedean spiral, Euler spiral, Fermat's spiral, logarithmic spiral, involute circle.

According to some embodiments, the collector plates comprise plates that have been wound around a central axis to a generalized cylinder shape having a cross-section of an open curve.

According to some embodiments, the collector plates comprise a stack of parallel plates.

In each of the embodiments shown in Figs. 2A - 2D, the central part 23a, 23b, 23c, 23d of the cylindrical or spiral-formed collector assembly is empty. Preferably, air is prevented from flowing through the central part by blocking it. In this way, air flows only between the nested plates, which maximizes the contact between charged impurity particles and the collector surfaces. However, in other embodiments, it is possible to leave the central part unblocked, if the air flow rate through the purifier needs to be higher.

In one embodiment, one or more of the electrostatic collector plates have a cross-section of a circle, an oval, an ellipse or a round-cornered polygon.

In one embodiment, the collector assembly includes at least two plates, for example 3 to 50 plates. The number of plates can be odd or even.

In one embodiment, the washing system comprises nozzles that are movable with regard to the electrostatic collector plates.

In one embodiment, the washing system comprises one or more spray arms that are rotatable around the vertical central axis of the electrostatic collector plates. Washing efficiency can be optimized by having cylinder-shaped nested collector plates and rotating spray arms above the plates.

Preferably, the washing system is automated and integrated to the air purifier, and its use does not necessitate demounting of the collector assembly.

In one embodiment, the air purifier comprises two washing systems, a first washing system above the electrostatic collector plates and a second washing system above the ionization chamber. In this way it is possible to effectively clean both the plates and the ionization chamber, either simultaneously or by first cleaning the plates and then the ionization chamber.

In one embodiment, every other of the electrostatic collector plates is either negatively or positively charged, and every other grounded.

In one embodiment, the electrostatic collector plates do not have any sharp corners or edges. Sharp edges could lead to generation of ozone, which is not desirable, particularly in a household environment.

In one embodiment, the electrostatic field between the electrostatic collector plates is at least 3 kV/cm, preferably at least 4 kV/cm.

In one embodiment, the distance between the electrostatic collector plates is for example from 2 mm to 150 mm, preferably from about 3 mm to about 30 mm, more preferably from 4 mm to 10 mm. The spacing of the plates is fixed by isolated bars or combs.

In the embodiment of Fig. 2, the air purifier further comprises an active carbon filter 17 located between the nozzles 20 and the fan 18. The active carbon filter is used for ozone removal, which is highly desired in household air purification applications. Since active carbon filters are particularly sensitive to water and humidity, the nozzles and the collector plates must be located below the active carbon filter. In this way, during the drying mode, the fan 18 is able to blow air in such a direction (downwards) that any humidity or water droplets will not be conducted from the collector plates towards the active carbon filter 17 but to the opposite direction, towards the ionization chamber 12.

In one embodiment, the housing comprises in a cascade: the ionization chamber; the electrostatic collector plates; the washing system; an active carbon filter.

In the embodiment of Fig. 2, the ionization chamber 12 comprises an ionizer with ionizing needles 13 attached to a tube located in the middle of the ionization chamber 12. Needle-formed ionizers are advantageous because the volume where ozone might be generated is smaller.

The material of the collector plates may be any suitable conducting material, for example a metal or an electrically conductive plastic or an electrically conductive polymer. Suitable electrically conductive polymers include polyfluorenes, polyphenylenes, polypyrenes, polyazulenes, polynaphthalenes, polypyrroles, polycarbazoles, polyindoles, polyazepines, polyanilines, polythiophenes, poly(3,4-ethylenedioxythiophene), poly(p-phenylene sulphide), polyacetylenes, poly(p-phenylene vinylene). Suitable metals include stainless steel and aluminium in any suitable form, such as a plate or a grid.

Preferably, the material of the collector plates has a conductivity of at least 50 kS/cm, for example at least 100 kS/cm.

It is to be understood that the embodiments of the invention disclosed are not limited to the particular structures, process steps, or materials disclosed herein, but are extended to equivalents thereof as would be recognized by those ordinarily skilled in the relevant arts; the scope of protection is defined by the appended claims. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In this description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some embodiments of the present invention find industrial application in the field of household air purifiers.

**REFERENCE SIGNS LIST**

| | |
|---|---|
| 11 | housing |
| 12 | ionization chamber |
| 13 | ionization needles |
| 14 | electrostatic collector |
| 15, 16 | collector plates |
| 17 | active carbon filter |
| 18 | axial fan |
| 19 | electronics |
| 20 | nozzles |
| 21,22 | nested spiral-formed collector plates |
| 23a, 23b, 23c, 23d | central part |

### CITATION LIST

### Patent Literature

JP 2002035641 A
US 4240809
EP 0995494 A2
US 850321
US 2015/0182976 A1

## Claims

1. An air purifier comprising a housing (11) with an essentially vertical central axis when in operation, said housing (11) exhibiting in a cascade:
- an ionization chamber (12) arranged for charging impurity particles in the incoming air;
- electrostatic collector plates (15, 16) located above the ionization chamber and arranged for trapping the charged impurity particles;
- a washing system (20) above the electrostatic collector plates, which washing system is arranged for dispensing a cleansing solution onto the electrostatic collector plates;
- and a fan system (18) inside the housing, **characterized in that** the fan system is capable of two-mode action: a purification mode of aspirating air to be purified upwards, through the ionization chamber and subsequently through the electrostatic collector plates, and a drying mode of blowing air in the opposite direction;
wherein the fan system is located above the washing system and it comprises an axial fan that is able to blow air in both directions.

2. The air purifier according to claim 1, wherein the electrostatic collector plates comprise nested generalized cylinders or nested spiral-wound plates.

3. The air purifier according to any of the preceding claims, wherein one or more of the electrostatic collector plates have a cross-section of a circle, an oval, an ellipse or a round-cornered polygon.

4. The air purifier according to any of the preceding claims, wherein the washing system comprises nozzles that are movable with regard to the electrostatic collector plates.

5. The air purifier according to any of the preceding claims, wherein the washing system comprises one or more spray arms that are rotatable around the vertical axis of the electrostatic collector plates.

6. The air purifier according to any of the preceding claims, wherein the electrostatic field between the electrostatic collector plates is at least 3 kV/cm, preferably at least 4 kV/cm.

7. The air purifier according to any of the preceding claims, wherein the distance between the electrostatic collector plates is from about 3 mm to about 30 mm, preferably from 4 mm to 10 mm.

8. The air purifier according to any of the preceding claims, wherein said housing comprises in a cascade:
- the ionization chamber;
- the electrostatic collector plates;
- the washing system;
- an active carbon filter.

9. The air purifier according to any of the preceding claims, wherein the ionization chamber comprises an ionizer with ionizing needles.

10. The air purifier according to any of the preceding claims, which has been designed for household use and in which the flow rate of air during the purification mode is from 50 to 1000 m³/h.

11. A method of purifying air, comprising one or more cycles comprising the steps of:
- aspirating air to be purified by means of a fan system in an upward direction into an ionization chamber for charging impurity particles in the air and subsequently through electrostatic collector plates for trapping the charged impurity particles;
- suspending air aspiration;
- dispensing a cleansing solution onto the electrostatic collector plates by means of an automated washing system located above the electrostatic collector plates;
- drying the electrostatic collector plates by blowing air by means of the fan system in a downward direction;
- suspending air blowing;
- resuming air aspiration; and
wherein the fan system is located above the washing system and it comprises an axial fan that is able to blow air in both directions, and
for the duration of the drying step, the rotation direction of a propeller of the axial fan is changed to opposite to change the direction of air flow to the downward direction; and
before resuming air aspiration, the rotation direction of the propeller of the axial fan is restored to the original direction to change the direction of air flow back to the upward direction.

12. The method according to claim 11, wherein the dispensing step is carried out by spraying a cleansing solution onto the electrostatic collector plates by means of one or more spray arms rotating above the electrostatic collector plates.

13. The method according to claim 11 or claim 12, wherein after aspirating the air through the electrostatic collector plates, it is aspirated further upwards through an active carbon filter located above said washing system.

## Patentansprüche

1. Luftreiniger, umfassend ein Gehäuse (11) mit einer im Wesentlichen vertikalen Mittelachse, wenn in Betrieb, wobei das Gehäuse (11) in einer Kaskade aufweist:
- eine Ionisationskammer (12), die zum Laden von Unreinheitspartikeln in der eingehenden Luft angeordnet ist;
- elektrostatische Sammlerplatten (15, 16), die über der Ionisationskammer liegen und zum Einfangen der geladenen Unreinheitspartikel angeordnet sind;
- ein Waschsystem (20) über den elektrostatischen Sammlerplatten, welches Waschsystem zum Abgeben einer Reinigungslösung auf die elektrostatischen Sammlerplatten angeordnet ist;
- und ein Gebläsesystem (18) im Inneren des Gehäuses,
**dadurch gekennzeichnet, dass** das Gebläsesystem zu einer Zwei-Modus-Aktion imstande ist: einen Reinigungsmodus zum Ansaugen von zu reinigender Luft nach oben, durch die Ionisationskammer und anschließend durch die elektrostatischen Sammlerplatten, und einen Trocknungsmodus zum Ausblasen von Luft in der entgegengesetzten Richtung;
wobei das Gebläsesystem über dem Waschsystem liegt und ein Axialgebläse umfasst, das imstande ist, Luft in beide Richtungen zu blasen.

2. Luftreiniger nach Anspruch 1, wobei die elektrostatischen Sammlerplatten verschachtelte generalisierte Zylinder oder verschachtelte spiralförmig gewundene Platten umfassen.

3. Luftreiniger nach einem der vorstehenden Ansprüche, wobei eine oder mehrere der elektrostatischen Sammlerplatten einen Querschnitt eines Kreises, eines Ovals, einer Ellipse oder eines Vielecks mit abgerundeten Ecken aufweisen.

4. Luftreiniger nach einem der vorstehenden Ansprüche, wobei das Waschsystem Düsen umfasst, die in Bezug auf die elektrostatischen Sammlerplatten beweglich sind.

5. Luftreiniger nach einem der vorstehenden Ansprüche, wobei das Waschsystem einen oder mehrere Sprüharme umfasst, die um die vertikale Achse der elektrostatischen Sammlerplatten drehbar sind.

6. Luftreiniger nach einem der vorstehenden Ansprüche, wobei das elektrostatische Feld zwischen den elektrostatischen Sammlerplatten mindestens 3kV/cm, vorzugsweise mindestens 4 kV/cm ist.

7. Luftreiniger nach einem der vorstehenden Ansprüche, wobei der Abstand zwischen den elektrostatischen Sammlerplatten von etwa 3 mm bis etwa 30 mm ist, vorzugsweise von 4 mm bis 10 mm.

8. Luftreiniger nach einem der vorstehenden Ansprüche, wobei das Gehäuse in einer Kaskade aufweist:
- die Ionisationskammer;
- die elektrostatischen Sammlerplatten;
- das Waschsystem;
- ein Aktivkohlefilter.

9. Luftreiniger nach einem der vorstehenden Ansprüche, wobei die Ionisationskammer eine Ionisator mit Ionisierungsnadeln umfasst.

10. Luftreiniger nach einem der vorstehenden Ansprüche, der für Verwendung im Haushalt gestaltet ist und in dem die Strömungsrate von Luft während des Reinigungsmodus von 50 bis 1000 m³/h ist.

11. Verfahren zum Reinigen von Luft, umfassend einen oder mehrere Zyklen, umfassend die Schritte:
- Ansaugen von zu reinigender Luft mittels eines Gebläsesystems in einer Aufwärtsrichtung in eine Ionisationskammer zum Laden von Unreinheitspartikeln in der Luft und anschließend durch elektrostatische Sammlerplatten zum Einfangen der geladenen Unreinheitspartikel;
- Unterbrechen der Luftansaugung;
- Abgeben einer Reinigungslösung auf die elektrostatischen Sammlerplatten mittels eines automatisierten Waschsystems, das über den elektrostatischen Sammlerplatten liegt;
- Trocknen der elektrostatischen Sammlerplatten durch Ausblasen von Luft mittels des Gebläsesystems in einer Abwärtsrichtung;
- Unterbrechen des Ausblasens von Luft;
- Wiederaufnehmen der Luftansaugung; und
wobei das Gebläsesystem über dem Waschsystem liegt und ein Axialgebläse umfasst, das imstande ist, Luft in beide Richtungen zu blasen, und
für die Dauer des Trocknungsschritts die Drehrichtung eines Propellers des Axialgebläses zu entgegengesetzt geändert wird, um die Richtung von Luftstrom zu der Abwärtsrichtung zu ändern; und
vor Wiederaufnehmen von Luftansaugung die Drehrichtung des Propellers des Axialgebläses zu der ursprünglichen Richtung wiederhergestellt wird, um die Richtung von Luftstrom zurück zu der Aufwärtsrichtung zu ändern.

12. Verfahren nach Anspruch 11, wobei der Abgabeschritt durch Sprühen einer Reinigungslösung auf die elektrostatischen Sammlerplatten mittels eines oder mehrerer Sprüharme ausgeführt wird, die über den elektrostatischen Sammlerplatten drehen.

13. Verfahren nach Anspruch 11 oder Anspruch 12, wobei nach Ansaugen der Luft durch die elektrostatischen Sammlerplatten diese weiter nach oben durch ein Aktivkohlefilter angesaugt wird, das über dem Waschsystem liegt.

## Revendications

1. Purificateur d'air comprenant un boîtier (11) avec un axe central essentiellement vertical en fonctionnement, ledit boîtier (11) exposant en une cascade :
- une chambre d'ionisation (12) agencée pour charger des particules d'impureté dans l'air entrant ;
- des plaques collectrices électrostatiques (15, 16) situées au-dessus de la chambre d'ionisation et agencées pour piéger les particules d'impureté chargées ;
- un système de lavage (20) au-dessus des plaques collectrices électrostatiques, lequel système de lavage est agencé pour distribuer une solution de nettoyage sur les plaques collectrices électrostatiques ;
- et un système de ventilateur (18) à l'intérieur du boîtier,
**caractérisé en ce que** le système de ventilation est capable d'une action à deux modes : un mode de purification consistant à aspirer de l'air devant être purifié vers le haut, à travers la chambre d'ionisation puis à travers les plaques collectrices électrostatiques, et un mode de séchage consistant à souffler de l'air dans la direction opposée ;
dans lequel le système de ventilateur est situé au-dessus du système de lavage et il comprend un ventilateur axial qui est capable de souffler de l'air dans les deux directions.

2. Purificateur d'air selon la revendication 1, dans lequel les plaques collectrices électrostatiques comprennent des cylindres généralisés emboîtés ou des plaques enroulées en spirale emboîtées.

3. Purificateur d'air selon l'une quelconque des revendications précédentes, dans lequel une ou plusieurs des plaques collectrices électrostatiques ont une section transversale d'un cercle, d'un ovale, d'une ellipse ou d'un polygone à coins arrondis.

4. Purificateur d'air selon l'une quelconque des revendications précédentes, dans lequel le système de lavage comprend des buses qui sont mobiles par rapport aux plaques collectrices électrostatiques.

5. Purificateur d'air selon l'une quelconque des revendications précédentes, dans lequel le système de lavage comprend un ou plusieurs bras de pulvérisation qui peuvent tourner autour de l'axe vertical des plaques collectrices électrostatiques.

6. Purificateur d'air selon l'une quelconque des revendications précédentes, dans lequel le champ électrostatique entre les plaques collectrices électrostatiques est d'au moins 3 kV/cm, de préférence d'au moins 4 kV/cm.

7. Purificateur d'air selon l'une quelconque des revendications précédentes, dans lequel la distance entre les plaques collectrices électrostatiques est d'environ 3 mm à environ 30 mm, de préférence de 4 mm à 10 mm.

8. Purificateur d'air selon l'une quelconque des revendications précédentes, dans lequel ledit boîtier comprend en une cascade :
- la chambre d'ionisation ;
- les plaques collectrices électrostatiques ;
- le système de lavage ;
- un filtre à charbon actif.

9. Purificateur d'air selon l'une quelconque des revendications précédentes, dans lequel la chambre d'ionisation comprend un ioniseur avec des aiguilles ionisantes.

10. Purificateur d'air selon l'une quelconque des revendications précédentes, qui a été conçu pour un usage domestique et dans lequel le débit d'écoulement d'air pendant le mode de purification est de 50 à 1000 m³/h.

11. Procédé de purification de l'air, comprenant un ou plusieurs cycles comprenant les étapes consistant à :
- aspirer de l'air devant être purifié au moyen d'un système de ventilateur dans une direction vers le haut jusque dans une chambre d'ionisation pour charger des particules d'impuretés dans l'air et ensuite à travers des plaques collectrices électrostatiques pour piéger les particules d'impureté chargées ;
- suspension l'aspiration d'air ;
- distribuer une solution de nettoyage jusque sur les plaques collectrices électrostatiques au moyen d'un système de lavage automatisé situé au-dessus des plaques collectrices électrostatiques ;
- sécher les plaques collectrices électrostatiques en soufflant de l'air au moyen du système de ventilateur dans une direction vers le bas ;
- suspendre le soufflage d'air ;
- reprendre l'aspiration d'air ; et
dans lequel le système de ventilateur est situé au-dessus du système de lavage et il comprend un ventilateur axial qui est capable de souffler de l'air dans les deux directions, et
pendant la durée de l'étape de séchage, la direction de rotation d'une hélice du ventilateur axial est changée à l'opposé pour changer la direction d'écoulement d'air dans la direction vers le bas; et
avant de reprendre l'aspiration d'air, la direction de rotation de l'hélice du ventilateur axial est rétablie dans la direction d'origine pour changer la direction d'écoulement d'air en retour dans la direction vers le haut.

12. Procédé selon la revendication 11, dans lequel l'étape de distribution est réalisée en pulvérisant une solution de nettoyage jusque sur les plaques collectrices électrostatiques au moyen d'un ou plusieurs bras de pulvérisation tournant au-dessus des plaques collectrices électrostatiques.

13. Procédé selon la revendication 11 ou la revendication 12, dans lequel après l'aspiration de l'air à travers les plaques collectrices électrostatiques, il est aspiré davantage vers le haut à travers un filtre à charbon actif situé au-dessus dudit système de lavage.
